# EUROPEAN PATENT APPLICATION

(11) **EP 3 531 522 A1**
(43) Date of publication of application: **28.08.2019**
(21) Application number: 18382114.9
(22) Date of filing: 27.02.2018
(51) Int. Cl.: H02G 11/02, B65H 75/00

(54) **DEVICE ADAPTED FOR WINDING A CABLE**

(71) Applicant: Maxamcorp Holding, S.L., 28042 Madrid (ES)
(72) Inventor: MONTAÑO RUEDA, Luis Diego, E-48960 Galdácano, Vizcaya (ES); VAN NIEKERK, Hendrik Albertus Cornelius, E-48960 Galdácano, Vizcaya (ES)
(74) Representative: ABG Intellectual Property Law, S.L.

(57) **Abstract**

The present invention relates to a device for winding a cable around same, where it particularly relates to a device adapted for winding and an electrical cable of a blasting system together with the corresponding elements of the blasting system. The described device furthermore allows stacking a plurality of devices for winding a cable, such that they take up less space.

## Description

### Object of the Invention

The present invention relates to a device for winding a cable around same, where it particularly relates to a device adapted for winding and an electrical cable of a blasting system together with the corresponding elements of the blasting system. The device described furthermore allows stacking a plurality of devices for winding a cable, such that they take up less space.

### Background of the Invention

Devices for winding cables, ropes, strings, and other comparable filiform elements have been known in the state of the art for many years in the form of spools, reels, and the like. Depending on the specific application, each device is provided with specific characteristics and a specific name, but they all generally share a series of characteristics.

In general, reels normally have a cylindrical core and elements at both ends acting as stops to prevent the cable from unwinding. These elements are normally planar covers with a large radius compared to the core, and elements such as notches may often be provided therein for holding the cable.

In some fields of the art there are problems for which there are no effective solutions. In particular, in the field of mining or civil engineering controlled blasts requiring a large amount of primers are common, where each one is attached to a control device through a cable and a connector. It is extremely important to maintain a strict order in systems of this type to prevent accidents, and the plurality of cables makes it difficult to maintain safety.

In the mentioned applications the different cables often become tangled due to the excess cable, as well as it often being difficult to identify the connector corresponding to each primer.

### Description of the Invention

The present invention proposes a solution to the aforementioned problems by means of a device adapted for winding an electrical cable according to claim 1. Preferred embodiments of the invention are defined in the dependent claims.

A first inventive aspect provides a *device adapted for winding a cable, comprising*
*a first base, comprising a first face and a second face,*
*a second base, comprising a first face and a second face, and*
*a core, arranged between the second face of the first base and the first face of the second base, and attaching both bases to one another,*
*wherein*
*the first base comprises a plurality of pins, arranged such that they project substantially from the first face, or from the second face, or from both,*
*the second base comprises a plurality of spacers, arranged such that they project substantially from the second face, and*
*the core comprises a substantially hollow space.*

Throughout this document, a *cable* will be understood to be a filiform element providing a higher tensile strength than compressive strength, such as an electrical cable, a wire, a rope, or a string, for example, without being restricted to these elements. The action of *winding* will also be understood to comprise arranging a cable around an element, which will herein be referred to as core, such that it forms an orderly and compact assembly, for example a spool.

A *pin* will be interpreted herein as being an element projecting from the mentioned bases, with a dimension comparable to the width of the cable. *Spacer* will also be understood to be an element projecting from the second base, generally having larger dimensions than a *pin,* and having the structural function of separating the second base from a surface.

Advantageously, the first and second bases, arranged at both ends of the core, prevent the wound cable from slipping off the core, and at the same time they act as a support for the device. As an additional advantage, the hollow core allows a suitably sized device to be introduced therein, for example a blasting cap, or detonator, linked to the cable. Furthermore, the plurality of pins allows holding the cable by introducing it between the pins or forming a loop around one or several pins. The cable is thereby coiled up and does not get in an operator's way during a cable winding or unwinding operation. On the other hand, the plurality of spacers allows separating the second base from another surface, for example from the ground or from another device with a compatible configuration.

In one embodiment, the spacers have a substantially planar shape, such as an elongated blade shape, for example.

In a particular embodiment, *the plurality of pins of the first base is arranged in a peripheral portion of the first face of the first base, the pins projecting perpendicularly from said first face.*

Advantageously, arranging the pins in a peripheral portion of the first base allows increasing the stability of the device when it is supported on said pins. As an additional advantage, arranging the pins in a peripheral portion of the first base allows maximizing the number of pins comprised in the first base.

In a particular embodiment, *the plurality of spacers is arranged in a peripheral portion of the second face of the second base, the plurality of spacers projecting perpendicularly from said second face.*

Advantageously, arranging the spacers in a peripheral portion of the second base and perpendicularly with respect to the base, allows increasing the stability of the device when it is supported on said spacers, or the stability of another device with a compatible configuration supported on the second base.

In a particular embodiment, *the core has a circular inner section, or a polygonal section, or a polygonal section with rounded edges.*

Advantageously, the inner section having a circular or polygonal section allows housing in the cavity of the core a cylindrical-shaped device associated with the cable.

In a particular embodiment, *the core has a circular outer section, or a polygonal section, or a polygonal section with rounded edges.*

Advantageously, the outer section having a circular or polygonal section allows better grip between the cable and the core, preventing the cable from unwinding without the handling by an operator.

In a particular embodiment, *the first base, or the second base, or both are circular.*

Advantageously, the circular shape of the bases allows the device to roll on the bases if needed.

In a particular embodiment, the first base and the second base have the same dimensions.

A device with two bases having the same dimensions allows, on one hand, for simpler storage, and on the other hand makes it easier to stack two identical devices, in turn simplifying the storage and packaging of a set of devices.

In a particular embodiment, *the spacers arranged in a peripheral portion of the second face of the second base are shifted in the radial direction with respect to the radial position of the pins of the first base.*

By radially shifting the spacers with respect to the pins, a compatible configuration between the spacers of a device and the pins of another device is achieved, such that two or more devices can be stacked, with the advantages this entails for the storage and packaging of a set of devices.

In a particular embodiment, *the free ends of the spacers are inclined outwardly with respect to the device in the radial direction.*

Advantageously, the outward inclination of the spacers improves stability of the set when two or more devices are stacked, the spacers of one device fitting into the inner part of the pins of another device, which even produces a more secure fixing between two devices.

In a particular embodiment, *the spacers configure a protected space on the second face of the second base, said protected space being adapted for housing an electrical connection device.*

The described protected space is formed between the second base of a device and any one surface. Advantageously, the protected space is formed between the second base of one device and the first base of another device. In a particular embodiment, this protected space is utilized for housing an electrical connection device, or simply an electrical connector for the cable wound in the device for winding a cable. The spacers preferably have a length that is greater than the height of the electrical connection device.

In a particular embodiment, *the second base further comprises at least one coupling element adapted for coupling an electrical connection device, and a perimetral guiding wall arranged on the second face of the second base.*

Advantageously, the coupling element comprises one or more flanges adapted for securing an electrical connector, which even more advantageously is located in the central portion, approximately in the center of the protected space defined by the spacers. In one embodiment, the spacers have a length comparable to the dimensions of an electrical connection device.

In another particular embodiment, the perimetral guiding wall forms a closed geometry.

Said perimetral wall helps the electrical connection device to be correctly positioned with respect to other elements of the second base; in particular, the perimetral wall allows positioning the connector with respect to the coupling elements. Advantageously, the perimetral wall also serves for restricting the movements of the electrical connection device.

In a particular embodiment, *the second base has a notch in the radial direction, adapted for holding a cable.*

Advantageously, the notch allows holding the cable in the second base of the device, or it alternatively helps one end of the cable gain access to the protected space and to the connector.

In a particular embodiment, *the ratio of the length between the second base and a free end of the spacers, and the length between the first base and the free end of the pins is 4.*

In a particular embodiment, *the at least one coupling element is substantially symmetrical and is adapted for coupling an electrical connection device in any of the main directions defined by the axis or axes of symmetry.*

As a result of the symmetrical configuration of the coupling element, the electrical connection device can be coupled to the second base in the most appropriate orientation, without having to reposition the device for winding a cable, or without having to unwind more cable.

Advantageously, the electrical connection device can be coupled and uncoupled in a single operation. Furthermore, the operation of coupling or uncoupling the electrical connection device can be done using one hand, making the operation easier and faster.

In a particular embodiment, *the at least one coupling element and the perimetral guiding wall are arranged in the central portion of the second face of the second base, such that during operation the center of gravity of an electrical connection device is substantially aligned with a longitudinal axis of the core.*

Advantageously, the alignment of the center of gravity of the coupling element in its operating position with the axis of the core, which corresponds with the axis of rotation of the device during the cable unwinding operation, allows reducing vibrations during the winding or unwinding operation.

In another embodiment, the operation of extracting the blasting cap housed in the core can be done independently of the operation of coupling or uncoupling the electrical connection device with respect to the at least one coupling element. Advantageously, the independent execution of the operations of extracting and uncoupling allows the operator to establish the blasting system in a safe, simple, and quick manner.

In a particular embodiment, the length between the second base and a free end of the spacers is about 2.6 cm, and the length between the first base and a free end of the pins is about 0.65 cm.

In another particular embodiment, the height of the pins is comparable to the thickness of the cable. In yet another particular embodiment, the separation between pins is comparable to the thickness of the cable. Advantageously, this size and configuration of the pins allow holding a cable between a pair of pins in a simple manner.

In a particular embodiment, *the device comprises 34 pins and 4 spacers.*

All the features and/or steps of methods described in this specification (including the claims, description, and drawings) can be combined in any combination, with the exception of combinations of such mutually exclusive features.

### Description of the Drawings

These and other features and advantages of the invention will be more clearly understood based on the following detailed description of a preferred embodiment, given only by way of nonlimiting illustrative example in reference to the attached drawings.
Figure 1 shows a first profile view of the device.
Figure 2 shows a top plan view of the device.
Figure 3 shows a second profile view of the device.
Figure 4 shows a bottom plan view of the device.
Figure 5 shows a perspective view of the device with the wound cable indicated using a discontinuous line.
Figure 6 shows a perspective view of the device with the connector coupled to the second base indicated using a discontinuous line.
Figure 7 shows a perspective view of the device with the connector, with the cable and the detonator indicated using a discontinuous line.

### Detailed Description of the Invention

### Reference numbers:

1. First base
   1.1 First face of the first base
   1.2 Second face of the first base
2. Second base
   2.1 First face of the second base
   2.2 Second face of the second base
3. Core
   3.1 Hollow space
   3.2 Detonator
   3.3 Inner surface of the core
   3.4 Outer surface of the core
4. Pins
5. Spacers
6. Protected space
   6.1 Electrical connection device
7. Coupling elements
8. Perimetral wall
9. Notch
10. Winding device
   10.1 Cable

The present invention relates to a device (10) adapted for winding a cable (10.1) around a core (3) which attaches a first base (1) and a second base (2) to one another. In a preferred embodiment, the device (10) further comprises a plurality of pins (4) and a plurality of spacers (5), which are all arranged as discussed below.

In a possible application, the present invention is used in the field of mining and civil engineering as part of a blasting system, comprising, among other elements, an electrical cable (10.1), an electrical connector (6.1), and a primer or detonator (3.2). Advantageously, the present invention is used for the packaging and transport of the mentioned elements to the site where they are used. The present invention also serves for installing the blasting system in an orderly and practical manner for an operator, in particular when a large number of detonators (3.2) are used, as well as for minimizing the risk of losing any of the mentioned elements.

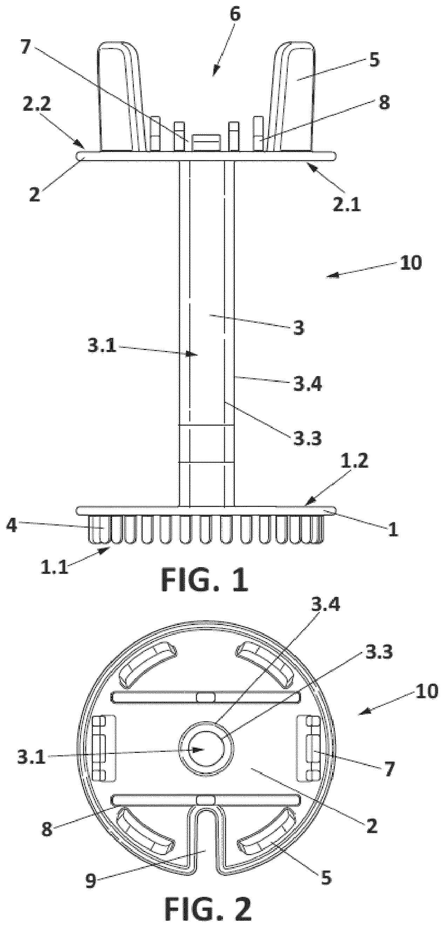

Figures 1, 2, 3 and 4 show four views of a particular embodiment of the present invention comprising two circular bases (1, 2) which are essentially planar, parallel to, and spaced from one another, which are herein referred to as first base (1) and second base (2) depending on the elements it supports, and which are attached to one another by means of the core (3) on which the cable (10.1) is wound.

In one embodiment, the core (3) is a hollow cylinder attached at each end to the two bases (1, 2) such that the axis of the cylinder is arranged in a manner substantially perpendicular to the plane containing each base (1, 2). In the attachment between the core (3) and each base (1, 2) there is a hole which allows access to the hollow space (3.1) formed by the cylindrical core (3). The hollow space (3.1) defines two surfaces of the core: an inner surface (3.3) of the core (3) and an outer surface (3.4) of the core (3). The core (3) has been defined as being cylindrical in this embodiment, both on its outer perimeter and on its inner perimeter, but other sections are also contemplated, such as, for example, hexagonal sections or polygonal sections with rounded edges both on its outer perimeter and on its inner perimeter. The section of the outer surface (3.4) of the core (3) helps to wind the cable (10.1), whereas the section of the inner surface (3.3) of the core (3) helps to introduce a detonator (3.2).

The main function of the bases (1, 2) is to prevent the cable (10.1) from slipping off the core (3). Furthermore, in the embodiment shown in Figures 1, 2, 3 and 4, the bases (1, 2) comprise a plurality of pins (4), a plurality of spacers (5), a coupling element (7), a perimetral guiding wall (8), and a notch (9) in the radial direction for holding a cable (10.1). In combination, the preceding elements allow:
a) winding a cable (10.1) of a detonator (3.2) around the core (3),
b) housing a detonator (3.2) in the hollow space (3.1) of the core (3),
c) coupling in a protected manner an electrical connection device or connector (6.1) to the second base (2) of the device (10), and
d) holding the cable (10.1) by means of pins (4) to prevent it from unwinding with respect to the device (10).

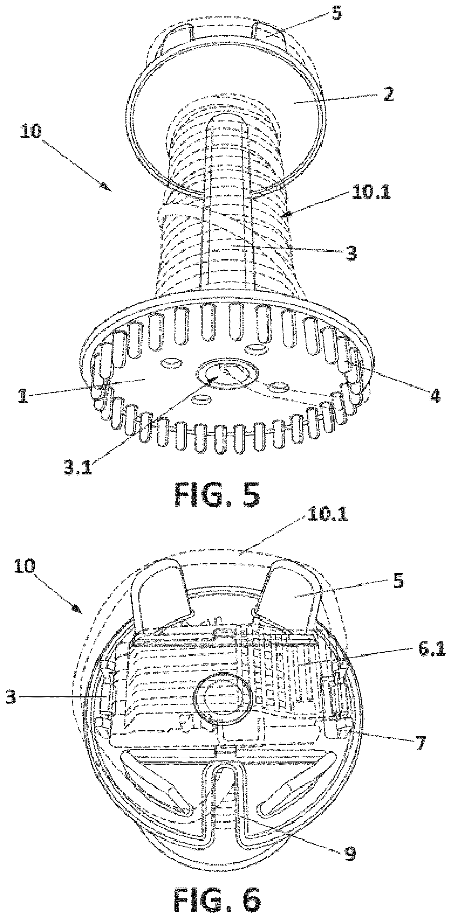

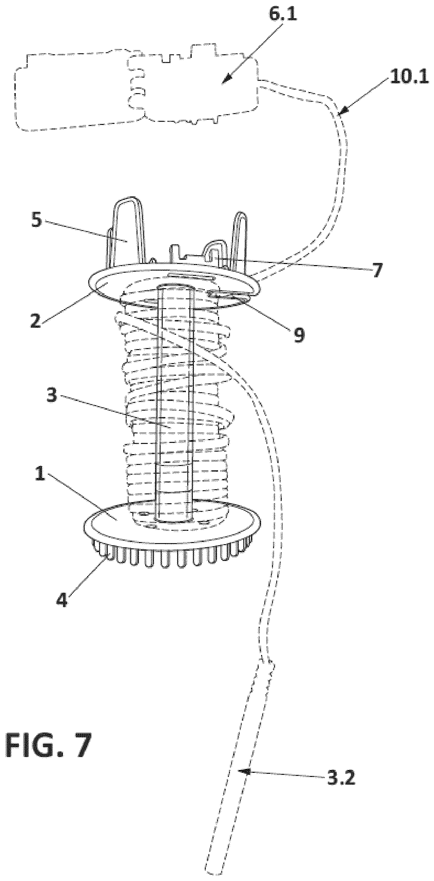

These functionalities and features are shown in a particular manner in Figures 5, 6 and 7, where the elements that are not claimed are depicted, being indicated using a discontinuous line.

According to the embodiment shown in Figures 1, 3, and 4, the first base (1) comprises a plurality of pins (4), 34 pins in a preferred embodiment, arranged in a row in the perimetral portion of the first base (1) and regularly spaced from one another. The pins (4) project perpendicularly from the first face (1.1) of the first base (1) and are in the form of small pegs or cylinders with a rounded tip. As described above, the function of the pins (4) is to hold the cable (10.1) by introducing it between two pins (4) or by forming a loop around one or several pins (4) . The pins (4) also perform the function of raising the first base (1) with respect to a support surface, where it allows the end of the cable (10.1) connected to the detonator (3.2) to project in a natural manner, without forcing it to bend. In this sense, the arrangement in the perimetral portion of the first base (1) allows increasing stability of the device (10).

The spacers (5) have the function of separating the second base (2) of the device (10) from any one surface which is supported on the end of the spacers (5). In the embodiment shown in Figures 1, 2, and 4, the second base (2) comprises four spacers (5) arranged in the perimetral portion of the second base (2) and spaced from one another such that they are facing in twos. This arrangement allows improving stability of an element that is supported on the spacers (5).

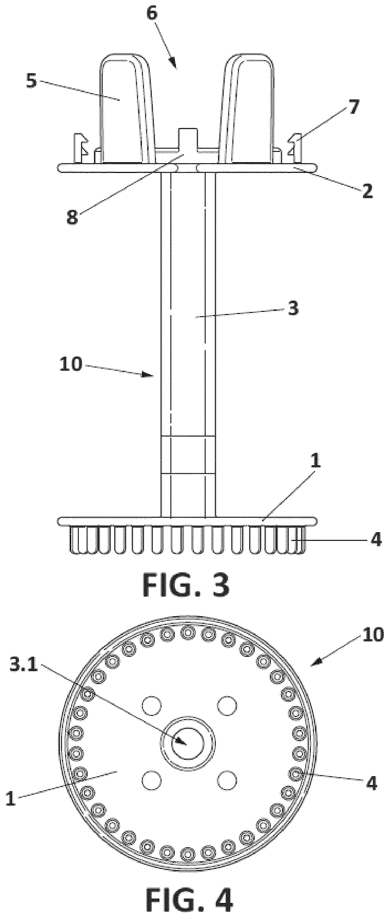

According to one embodiment of the present invention, the plurality of spacers (5) is shifted in the radial direction with respect to the radial position of the plurality of pins (4); in the embodiment shown in Figures 1 and 3, the distance between the center of the second base (2) and the plurality of spacers (5) is less than the distance between the center of the first base (1) and the plurality of pins (4). The first base (1) of a device (10) can thereby be supported on the plurality of spacers (5) of the second base (2) of another device (10), giving rise to a fitting between the plurality of pins (4) and the plurality of spacers (5). By attaching a plurality of devices (10) as described, a stack of devices that are grouped together in an orderly, secure, and compact manner is formed.

As shown in Figures 5 and 6, the spacers (5) also have the function of allowing a partial winding of the cable (10.1) around the plurality of spacers (5).

The space formed by the spacers (5) between the second base (2) and an element supported on them is referred to as protected space (6). This protected space (6) is shown in Figures 1, 2, and 6, and it serves for housing an electrical connection device or connector (6.1) of the blasting system, fixedly attached to the cable (10.1). Advantageously, the protected space (6) provides, as a result of the spacers (5) and the second base (2), a portion of space that is protected from blows and other external influences. To provide a solid attachment with the device (10), in the embodiment shown in Figures 1, 2, 3, and 6 the second base (2) further comprises coupling elements (7), the function of which is to anchor the connector (6.1) to the second base (2) in a detachable manner; in the embodiment shown, the coupling elements (7) comprise a plurality of flanges suitable for being coupled in a plurality of complementary flanges of the connector (6.1). The coupling elements (7) are arranged symmetrically with respect to the center of the second base (2), such that the connector (6.1) can be coupled to one of the main directions defined by the axis of symmetry, as required by the operator. Said main directions correspond with the parallel direction or the perpendicular direction with respect to the axis of symmetry.

In the embodiment shown in Figures 1, 2, 3, and 6, the second base (2) also comprises a perimetral wall (8) which allows guiding the connector (6.1) to its position for being coupled to the second base (2), such that an operator may perform the coupling/uncoupling operation with a single hand. The perimetral wall (8) can be a continuous wall, or as shown in Figures 2 and 6, a plurality of discontinuous elements. Both the coupling elements (7) and the perimetral wall (8) are positioned in a central portion of the second base (2), such that the longitudinal axis of the core (3) is aligned with the center of gravity of the connector (6.1). As a result of this alignment, the vibrations produced during the winding or unwinding operation are minimal, or even disappear.

The second base (2) furthermore has a notch (9) in the radial direction from the edge of the base (2), which allows holding the portion of the cable (10.1) that is attached to the connector (6.1), preventing its movement.

## Claims

1. A device (10) adapted for winding a cable (10.1), comprising
a first base (1), comprising a first face (1.1) and a second face (1.2),
a second base (2), comprising a first face (2.1) and a second face (2.2), and
a core (3), arranged between the second face (1.2) of the first base (1) and the first face (2.1) of the second base (2), and attaching both bases (1, 2) to one another,
wherein
the first base (1) comprises a plurality of pins (4), arranged such that they project substantially from the first face (1.1), or from the second face (1.2), or from both,
the second base comprises a plurality of spacers (5), arranged such that they project substantially from the second face (2.2), and
the core (3) comprises a substantially hollow space (3.1).

2. The device (10) according to claim 1, **characterized in that** the plurality of pins (4) of the first base (1) is arranged in a peripheral portion of the first face (1.1) of the first base (1), the pins (4) projecting perpendicularly from said first face (1.1).

3. The device (10) according to any of claims 1 to 2, **characterized in that** the plurality of spacers (5) is arranged in a peripheral portion of the second face (2.2) of the second base (2), the plurality of spacers (5) projecting perpendicularly from said second face (2.2).

4. The device (10) according to any of claims 1 to 3, **characterized in that** the core (3) has a circular inner section (3.3), a polygonal section, or a polygonal section with rounded edges.

5. The device (10) according to any of claims 1 to 4, **characterized in that** the core (3) has a circular outer section (3.4), or a polygonal section, or a polygonal section with rounded edges.

6. The device (10) according to any of claims 1 to 5, **characterized in that** the first base (1), or the second base (2), or both are circular.

7. The device (10) according to any of claims 1 to 6, **characterized in that** the spacers (5) arranged in a peripheral portion of the second face (2.2) of the second base (2) are shifted in the radial direction with respect to the radial position of the pins (4) of the first base (1).

8. The device (10) according to any of claims 1 to 7, **characterized in that** the free ends of the spacers (5) are inclined outwardly with respect to the device (10) in the radial direction.

9. The device (10) according to any of claims 1 to 8, **characterized in that** the spacers (5) configure a protected space (6) on the second face (2.2) of the second base (2), said protected space (6) being adapted for housing an electrical connection device (6.1).

10. The device (10) according to any of claims 1 to 9, **characterized in that** the second base (2) further comprises
at least one coupling element (7) adapted for coupling an electrical connection device (6.1), and
a perimetral guiding wall (8) arranged on the second face (2.2) of the second base (2).

11. The device (10) according to any of claims 1 to 10, **characterized in that** the second base (2) has a notch (9) in the radial direction, adapted for holding a cable (10.1).

12. The device (10) according to any of claims 1 to 11, **characterized in that** the ratio of the length between the second base (2) and a free end of the spacers (5), and the length between the first base (1) and the free end of the pins (4) is 4.

13. The device (10) according to any of claims 10 to 12, **characterized in that** the at least one coupling element (7) is substantially symmetrical and is adapted for coupling an electrical connection device (6.1) in any of the main directions defined by the axis or axes of symmetry.

14. The device (10) according to any of claims 10 to 13, **characterized in that** the at least one coupling element (7) and the perimetral guiding wall (8) are arranged in the central portion of the second face (2.2) of the second base (2), such that during operation the center of gravity of an electrical connection device (6.1) is substantially aligned with a longitudinal axis of the core (3).

15. The device (10) according to any of claims 1 to 14, **characterized in that** the device (10) comprises 34 pins (4) and 4 spacers (5).
